(19) **Europäisches Patentamt**
**European Patent Office**
**Office européen des brevets**

(11) **EP 3 418 821 B1**

(12) **EUROPEAN PATENT SPECIFICATION**

(45) Date of publication and mention
of the grant of the patent:
**08.09.2021   Bulletin 2021/36**

(51) Int Cl.:
***G05B 13/04*** *(2006.01)*

(21) Application number: **17305746.4**

(22) Date of filing: **19.06.2017**

(54) **METHOD AND DEVICE FOR CONFIGURING A DATA TRANSMISSION SYSTEM**

VERFAHREN UND VORRICHTUNG ZUM KONFIGURIEREN EINES
DATENÜBERTRAGUNGSSYSTEMS

PROCÉDÉ ET DISPOSITIF DE CONFIGURATION D'UN SYSTÈME DE TRANSMISSION DE
DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.12.2018   Bulletin 2018/52**

(73) Proprietor: **Nokia Technologies Oy
02610 Espoo (FI)**

(72) Inventors:
• **HOYDIS, Jakob
91620 Nozay (FR)**
• **CAMMERER, Sebastian
72074 TUBINGEN (DE)**
• **DÖRNER, Sebastian
97980 Bad Mergentheim (DE)**

• **TEN BRINK, Stephan
70469 Stuttgart (DE)**

(74) Representative: **Nokia EPO representatives
Nokia Technologies Oy
Karakaari 7
02610 Espoo (FI)**

(56) References cited:
**US-B2- 9 681 332**

• **TIMOTHY J O'SHEA ET AL: "An Introduction to
Machine Learning Communications Systems",
ARXIV.ORG, CORNELL UNIVERSITY LIBRARY,
201 OLIN LIBRARY CORNELL UNIVERSITY
ITHACA, NY 14853, 2 February 2017 (2017-02-02),
XP080746465,**

**Description**

FIELD OF THE INVENTION

The present invention relates to the field of telecommunication. In particular, the present invention relates to a method and a device for configuring a data transmission system.

BACKGROUND

In known transmission systems, the transmitter is composed of multiple processing blocks that carry out well-defined and isolated functions, such as source and channel coding, modulation, pulse shaping, digital-to-analog conversion (DAC), mixing on a radio/optical carrier, and amplification. Likewise, the receiver consists of similar blocks in reverse order, namely amplification, down conversion, analog-to-digital conversion (ADC), matched filtering, decimation, equalization, demodulation, channel and source decoding. In such transmission systems, each functional block is designed and optimized individually, which may not result in the best end-to-end performance.

From a high-level perspective, each of the transmitter, channel and receiver of a transmission system transforms an input vector into an output vector, and can hence be modeled as a neural network. Since a chain of neural networks is again an even larger neural network, it has been proposed to model an entire transmission system as a neural network autoencoder. Such a system can be trained from end-to-end in a supervised manner, to achieve a better end-to-end performance.

Although end-to-end training of communications systems is quite appealing from a theoretical point of view, it suffers from the fundamental practical problem that during the learning process the gradient of the communications channel must be computed, i.e., if one slightly changes the input, what would be the effect on the output. Known solution consists of training the neural network for a stochastic channel model for which the gradient can be computed. However, if the resulting learned transceiver is used on real hardware and communications takes place over a real channel, the performance is generally unsatisfactory due to the mismatch between the channel model used during training and the real channel.

US9681332 describes the uses of a model of the energy consumption of a transmission system to select a trade-off between energy consumption for compression and for transmission.

TIMOTHY J O'SHEA ET AL: "An Introduction to Machine Learning Communications Systems", ARXIV.ORG, CORNELL UNIVERSITY LIBRARY, 201 OLIN LIBRARY CORNELL UNIVERSITY ITHACA, NY 14853, 2 February 2017 discloses interpreting and training a communications system as an autoencoder. It implements the system design as an end-to-end reconstruction optimization task that seeks to jointly optimize transmitter and receiver components in a single process.

SUMMARY

It is thus an object of embodiments of the present invention to propose methods and devices for configuring a data transmission and processing system, which do not show the inherent shortcomings of the prior art.

Accordingly, embodiments of the invention according to independent claims 1 and 8-11 are provided.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a block diagram of a data transmission system,
Figure 2 is a block diagram of a machine learning model of the system of Figure 1,
Figure 3 is a flowchart of a method for configuring the system of Figure 1,
Figure 4 is a functional view of an embodiment of the data transmission system of Figure 1, configured for recovering of labelled training data, and
Figure 5 is structural view of the configuration device of the system of Figure 1.

DESCRIPTION OF EMBODIMENTS

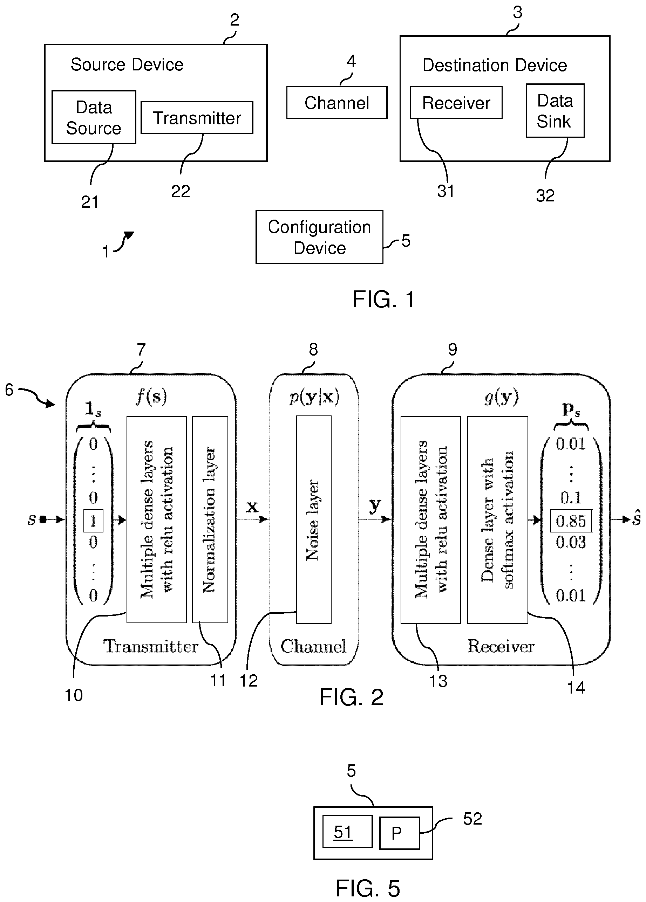

**Figure 1** is a block diagram of a data transmission system 1. The data transmission system 1 comprises a source device 2, a destination device 3, a communication channel 4 connecting the source device 2 to the destination device 3, and a configuration device 5. The system 1 allows transferring data from the source device 2 to the destination device 3.

The source device 2 comprises a data source 21 and a transmitter 22. The data source 21 is configured for providing data that is used by the system 1. The data source 21 may include for example at least one of: a sensor, a user interface, a local memory, a network interface... The data provided by the data source 21 may include at least one of: digital images, video and audio files, data coming from sensors, radars, telescopes, radio receivers... The transmitter 22 is configured for processing the data provided by the data source 21 and for outputting the processed data to the communication channel 4 for transmission to the destination device 3. The transmitter 22 comprises a configurable part which may be configured by the configuration device 5 according to the method described hereafter with reference to Figures 2 to 4.

The source device 2 may present the hardware architecture of a computer and may be for example one of: a user device (laptop, smart phone, wearable activity tracker...), a network equipment (cellular radio station, router, cloud server...), a monitoring device (camera, Internet of Things sensor...).

The destination device 3 comprises a receiver 31 and a data sink 32. The receiver 31 processes the data received from the source device 2 through the communication channel 4 to produce an output for the data sink 33. The receiver 31 comprises a configurable part which may be configured by the configuration device 5 according to the method described hereafter with reference to Figures 2 to 4. The data sink 3 receives the output of the receiver 31 and may include for example one of: a user interface (display, audio speaker...), a local memory, a network interface...

The destination device 3 may present the hardware architecture of a computer and may be for example one of: a user device (laptop, smart phone...), a network equipment (cellular radio station, router, cloud server...), a monitoring device (camera, Internet of Things sensor...).

The communication channel 4 provides a physical link between the transmitter 22 of the source device 2 and the receiver 31 of the destination device 3. The communication channel 4 is for example a radio link, a coaxial cable, a twisted pair cable, and optical fiber... In some embodiments, the communication channel 4 comprises multiple orthogonal channels (in time/frequency/space) that are used in parallel.

The configuration device 5 is configured for training a machine learning model 6 of the system 1 and for configuring the system 1 according to the trained machine learning model 6. Training the model and configuring the system 1 may occur for example during an initial setup of the system 1 and/or after the system 1 has already been setup and functioning. The configuration device 5 is configured for communication with the source device 2 and/or the destination device 3.

**Figure 2** is a block diagram of a machine learning model 6 of the system 1, used by the configuration device 5.

From a high-level perspective, each of the transmitter 22, communication channel 4 and receiver 31 of Figure 1 transforms an input vector into an output vector, and can hence be modeled, at least partially, as a neural network. Since a chain of neural networks is again an even larger neural network, the configuration device 5 can model the entire system 1 by a neural network-based machine learning model 6. The machine learning model 6 can be trained from end-to-end as an auto-encoder, for example via stochastic gradient descent (SGD) for any differentiable loss function. By doing so, the configuration device 5 jointly optimize all of the individual components with respect to an end-to-end metric. This is fundamentally different from traditional system design where each component is individually optimized for its own sub-task.

Indeed, in the system 1, the transmitter 22 wants to communicate one out of M possible messages denoted by "s" to the receiver 31 making "n" uses of the channel 4. To this end, it applies the transformation "f(s)" to the message "s" to generate the transmitted signal "x" which is a vector of "n" dimensions. The hardware of the transmitter 22 may impose certain constraints on "x", e.g., the squared norm of "x" must be smaller than "n". The communication rate of the system 1 is "R = k/n" bit/channel use, where "k = log2(M)". The channel 4 is described through the conditional probability density function "p(y|x)", where "y" denotes the received signal. Upon reception of "y", the receiver 31 applies the transformation "g(y)" to produce an estimate of the transmitted message. From a machine learning point of view, the communications system 1 can be seen as an auto-encoder. The goal of the auto-encoder is to find a representation "x" of "s" which is robust with respect to the perturbations created by the channel, so that it can reconstruct "s" based on "y".

More specifically, the machine learning model 6 comprises a transmitter model 7, a channel model 8 and a receiver model 9.

The input of the machine learning model 6 comprises input data s which specifies the message provided by the data source 21. The input data s may be encoded in any format allowing to specify one of M possible messages. Example format include a "one-hot" vector, i.e., an "M"-dimensional vector whose "s"th element is equal to 1 and all other elements are equal to zero, a binary vector or real vector.

The transmitter model 7 transforms an input data s into a vector x:

$$x = f(s)$$

The transmitter model 7 comprises a neural network which includes multiple dense layers 10 followed by a normalization layer 11. The multiple dense layers 10 include for example rectified linear unit (relu) activations. The normalization layer 11 is used to normalize the vector x in a way so that it is suitable for transmission by the transmitter hardware, e.g., comply with a maximum amplitude, power limit, etc. Accordingly, the normalization layer 11 applies a known transformation to its inputs, such as normalization to a predetermined norm, scaling of the elements to have not more than unit absolute value or unit absolute value, or convolution with a known filter. This layer has no trainable parameters but is used to satisfy the hardware constraints of the hardware transmitter 22. If the machine learning model 6 uses an integer input, the first layer of the transmitter neural network is for example an embedding, followed by the dense layers 10.

The channel model 8 represents the relation between the transmitted vector x and the received signal y, for example based on a probability density function p(y|x).

In some embodiments, the channel model 8 includes a sequence of stochastic regularization layers 12, e.g., addition of Gaussian noise, convolution with a random channel impulse response. These layers 12 have no trainable weights. The channel model 8 may include also at least one of: a random phase offset, frequency offset, sampling-frequency offset, quantization, and clipping. The channel model 8 provides a received signal y as a function of the vector x. The received signal y may be for example an IQ sample.

The receiver model 9 transforms a received signal y into output data $\hat{s}$ which is an estimate of the input data s: $\hat{s} = g(y)$. The receiver model 9 comprises a neural network with multiple dense layers 13 followed by a formatting layer 14. The multiple dense layers 13 include for example rectified linear unit (relu) activations. The formatting layer 14 provides the output data $\hat{s}$ in a format matching the format of the input data. For example, in the case of a "one-hot" vector, the formatting layer 14 has a softmax activation whose output "p_s" can be interpreted as a probability distribution over all possible messages, i.e., the elements of "p_s" are positive and sum-up to one. The decoded message corresponds then to the index of "p_s" with the highest probability. For binary inputs, the output vector may be generated by a formatting layer 14 with sigmoid activations that ensure that each element lies within the range from 0 to 1. Alternatively, tanh-activations can be used to ensure output values within the range from -1 to 1.

In some embodiments, the transmitter model 7 comprises, in addition to a neural network, other processing modules such as source coding, upsampling and pulse shaping, digital to analog conversion, mixer and amplifier...

Similarly, in some embodiments, the receiver model 9 comprises, in addition to a neural network, other processing modules such as amplifier and down conversion, analog to digital conversion, filtering and decimation, source decoding...

For example, at the transmitter 22, the neural network generates complex modulated symbols that are then upsampled and filtered as in a traditional system. Similar options are possible for the receiver. This is useful for multi-carrier systems, such as OFDM, where neural networks could be used to generate complex symbols that are mapped to subcarriers with the help of an inverse Fourier transform (FFT). At the receiver 31, the neural network would then begin after the FFT (and cyclic prefix removal).

Importantly, even if only sub-parts of the transmitter 22 and receiver 31 are replaced by neural network layers, the system 1 is always optimized from end-to-end. This is very different from individual learning/training of sub-components.

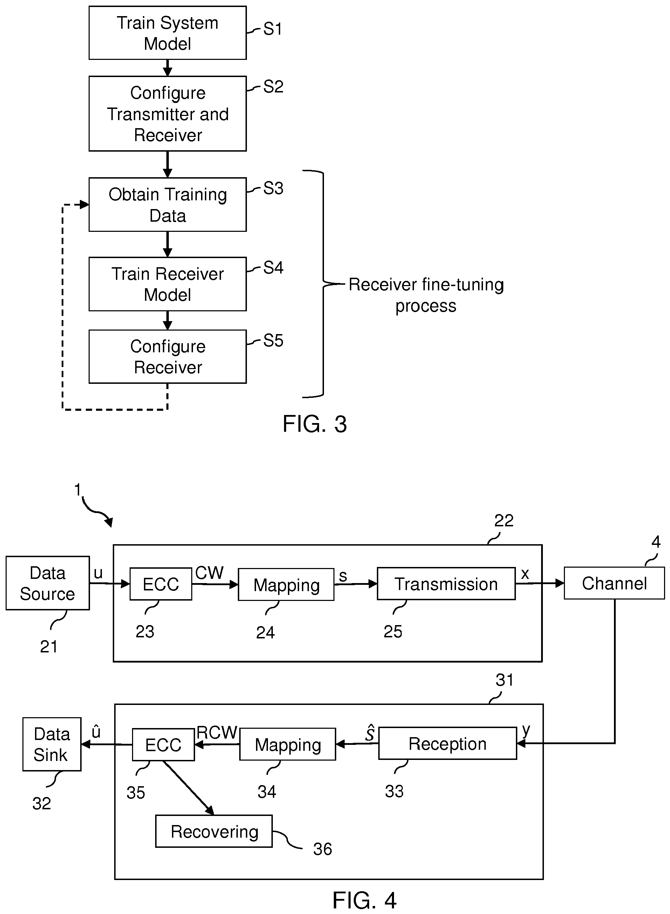

**Figure 3** is a flow chart of a method for configuring the data transmission system 1, executed by the configuration device 5, by using the machine learning model 6.

First, the configuration device 5 trains the machine learning model 6 (step S1). The machine learning model 6 is trained end-to-end as an auto-encoder. The training data is the set of all possible messages. Training the machine learning model 6 may comprises determining weights by applying the stochastic gradient descent technique for a given differentiable loss function. Examples of suitable loss functions include the binary cross-entropy, the mean squared error, categorical cross-entropy... depending on the format of the input data.

Then, the configuration device 5 configures the transmitter 22 and the receiver 31 according to the trained machine learning model 6 (step S2). Configuring a transmitter 22 may including deploying the neural network of the transmitter model 7, with its trained weights, in the configurable part of the transmitter 22. This may include for example the use of FPGA and/or a computer program and a processor. Similarly, configuring the receiver 31 may including deploying the neural network of the receiver model 9, with its trained weights, in the configurable part of the receiver 31. This may include for example the use of FPGA and/or a computer program and a processor.

Then, the transmitter 22 sends a plurality of messages, specified by input data s, to the receiver 31. For example, the transmitter 22 generates a plurality of messages as a function of random data. The receiver 31 stores the corresponding received signals y.

The configuration device 5 obtains training data representative of the sent messages (e.g. the input data s) and of the corresponding received signals y (step S3). For example, information about the sent messages is obtained from the transmitter 22, and information about the corresponding received signals y is obtained from the receiver 31. In some embodiments, such as described hereafter with reference to Figure 4, techniques are used for identifying the sent messages at the receiver 31. Accordingly, the configuration device 5 obtains the whole training data from the receiver 31, and communication with the transmitter 22 is not necessary at this step.

Then, the configuration device 5 trains the receiver model 9 according to the obtained training data (Step S4). More specifically, the receiver model 9 is trained based on the received signals y and corresponding messages or input data s. Training the receiver model 9 may comprises determining weights by applying the stochastic gradient descent technique for a given differentiable loss function.

Then, the configuration device 5 configures the receiver 22 according to the trained receiver model 9. As before, configuring the receiver 31 may including deploying the neural network of the receiver and application model 9, with its trained weights, in the configurable part of the receiver 31. This may include for example the use of FPGA and/or a computer program and a processor.

It should be noted that the weights of the transmitter model 7 remain unchanged during steps S3 to S5.

Steps S3 to S5 may be repeated to take varying channel condition (e.g. due to temperature changes, fog, movement of the transmitter and/or receiver, changes in the radio environment due to additional/less scatterers or blocking obstacles...) into account.

In some embodiments, the transmitter model 7 does not include a neural network. The transmitter 22 does not include a configurable part configured in function of a transmitter neural network. Accordingly, the transmitter 22 may be referred to as a "traditional" transmitter. Nevertheless, the machine learning model 6 is trained end-to-end at step S1.

In the system 1, the transmission of data is optimized end-to-end by training a machine learning model 6. This improves the efficiency of the data transmission.

During the initial training of the machine learning model 6 as an autoencoder (step S1), a channel model 8 is used. This allows determining the gradient of the channel model 8 for training. However, the channel model 8 may not represent the channel 4 perfectly, and this impacts the performance of the data transmission system 1.

Accordingly, the configuration device 5 performs a receiver fine-tuning process (Steps S3 to S5). This improves the performances of the data transmission system 1 by taking the real channel 4 into account. Repeating the receiver fine-tuning process allow taking varying channel condition into account, for example in real time.

Also, the concept has significant implications for physical layer security as it is very difficult for an eavesdropper to extract useful information from the transmitted signal because it does not correspond to any known modulation/coding scheme.

**Figure 4** is a functional view of the data transmission system 1, in an embodiment wherein the receiver 31 is configured for recovering labelled training data for the receiver fine-tuning process.

Indeed, after the initial configuration of the data transmission system 1 based on steps S1 to S5, the receiver 31 is susceptible to channel alterations over time, because the receiver model 9 was trained for the exact channel conditions at the time of training data measurements. To ensure that the receiver 31 can handle channel alterations over time it is helpful to perform the fine-tuning process periodically.

Therefore, this embodiment proposes a method to fine-tune the receiver model 9 adaptively in real-time such that it can handle fluctuating channel conditions (e.g., fog in a wireless backhaul channel). Thus, slightly drifting channel parameters (e.g., temperature drift) can be compensated via fine-tuning parallel to the data transmission. The configuration device 5 can do the fine-tuning training of the receiver model 9 in parallel without interrupting the data transmission. Whenever new weights are available for the receiver model 9, the receiver 31 can be configured with these values and therefore the receiver 31 is adapted to the current channel conditions.

As supervised training always requires a labeled training dataset (i.e., the originally transmitted message (bits or IQ-samples) that must be known at the receiver side, which is typically not the case due to the presence of noise), the present embodiment proposes a method to circumvent this problem and to acquire labeled training data during runtime directly from the received signal.

Accordingly, in this embodiment, the transmitter 22 comprises an error correction module 23, a mapping module 24 and a transmission module 25, and the receiver 31 comprises a reception module 33, a mapping module 34, an error correction module 35 and a recovering module 36.

The data source 21 provides source data u to the transmitter 22.

The error correction module 23 determines a codeword CW of N bits as a function of the source data u, by applying an error correction code (ECC). Examples of suitable ECC include LDPC, turbo codes, polar codes...

The mapping module 24 maps the codeword CW to a sequence of successive messages. For example, a unique binary number (labeling) can represent each of the M possible messages. The mapping module 24 maps respective groups of "log2(M)" bits to a corresponding message. As powerful error correction codes (e.g., LDPC codes) require long codewords of length "N" (typically "N>>log2(M)"), one codeword CW is divided into "N/log2(M)" messages.

The successive messages are specified by successive input data s and processed by the transmission module 25, which has been configured according to the trained transmitter model 7, to determine a transmitted signal x.

The successive received signals y are processed by the reception module 33, which has been configured according to the trained receiver model 9, to determine respective output data $\hat{s}$ identifying the received messages.

The mapping module 34 maps the received messages to their binary labelling to produce a received codeword RCW. The sequence of messages at the receiver 31 may be different from the sequence of messages at the transmitter 22, due to transmission errors. Thus, the received codeword RCW may be different from the codeword CW.

Accordingly, the error correction module 35 determines the destination data $\hat{u}$ by decoding the error correction codes applied by the error correction module 23 to the received sequence of messages.

In most case, the error correction code can correct any error and the source data u and the destination data $\hat{u}$ are identical.

Accordingly, the recovering module 35 can recover the transmitted messages (specified by input data s) associated with the respective received signals y. This is done by applying the same processing as the error correction module 23 and the mapping module 24 to the destination data û.

By using training data comprising the recovered input data s and corresponding received signals y for labelled training, the configuration device 5 determines an updated received model 9 (e.g. including new weights) and configures the receiver 31 according to the updated received model 9.

If the channel conditions are very bad, the error correction code may fail to recover the correct destination data û. One way how this can be determined at the receiver is by adding a cyclic redundancy check (CRC) around u which lets the receiver determine if û is valid. Only messages sequences for which the CRC is positive can then be included in the training data for fine-tuning to avoid training on erroneous data.

The embodiment of Figure 4 allows obtaining training data for the receiver fine-tuning process, without the need of a communication between the configuration device 5 and the transmitter 22. Obtaining the training data does not requires interruption of the communication between the transmitter 22 and the receiver 31 and does not requires the transmission of pilot symbols which would cause rate loss.

**Figure 5** is a structural view of the configuration device 5, which present the general architecture of a computer. The configuration device 5 comprises a processor 51 and a memory 52. The memory 52 stores a computer program P which, when executed by the processor 51, causes the configuration device 5 to execute the method described above with reference to Figure 2 to 4.

In some embodiments, the configuration device 5 is collocated with or part of the source device 2 or destination device 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

**Claims**

1. Computer-implemented method for configuring a data transmission system (1), wherein the data transmission system (1) comprises at least one transmitter (22), at least one receiver (31), and a communication channel (4) between the transmitter and the receiver, the method comprising:

   - training (S1) a machine learning model (6) of the data transmission system (1), wherein the machine learning model (6) specifies a relationship between input data (s) of the transmitter (22) and output data ($\hat{s}$) of the receiver (31), wherein the machine learning model (6) specifies at least a transmitter model (7), a channel model (8), and a receiver model (9) including a receiver neural network (10, 11), wherein the machine learning model is trained as an autoencoder,
   - configuring (S2) the transmitter and the receiver based on the trained machine learning model (6),

   **characterized in that** it comprises, after configuring (S2) the transmitter and the receiver based on the trained machine learning model (6):

   - obtaining (S3), from the receiver (31), training data specifying a set of messages sent by the transmitter and the corresponding signals received by the receiver, wherein said training data has been determined by the receiver by:

      - receiving successive signals (y),
      - determining a sequence of received messages ($\hat{s}$) corresponding to the received successive signals,

- mapping said sequence of received messages ($\hat{s}$) to a received codeword (RCW),
- determining destination data ($\hat{u}$) as a function of the received codeword (RCW), by decoding an error correction code, and
- determining a sequence of transmitted messages (s) as a function of the destination data ($\hat{u}$),

- training (S4) the receiver model (9) based on the obtained training data, and
- configuring (S5) the receiver based on the trained receiver model (9).

2. Method according to claim 1, wherein said transmitter model includes a transmitter neural network and said method comprises configuring said transmitter based on the trained machine learning model.

3. Method according to one of claims 1 to 2, comprising repeating said obtaining (S3) training data, training (S4) the receiver model and configuring (S5) the receiver.

4. Method according to one of claims 1 to 3, comprising determining whether said destination data ($\hat{u}$) is valid according to a cyclic redundancy check.

5. Method according to one of claims 1 to 4, wherein training said machine learning model comprises determining weights of the receiver neural network by applying a stochastic gradient descent algorithm.

6. Method according to one of claims 1 to 5, wherein the transmitter model includes a transmitter neural network, wherein the transmitter neural 20 network includes multiple dense layers (12) followed by a normalization layer (13) configured for applying one of: a normalization to a predetermined norm, scaling to a unit absolute value, convolution with a filter.

7. Method according to one of claims 1 to 6, wherein the transmitter model includes a transmitter neural network and at least one other transmitter processing module, and/or the receiver model includes said receiver neural network at least one other receiver processing module.

8. Computer program (P) comprising instructions which, when the program is executed by a computer, cause the computer to carry out the method of one of claims 1-7.

9. Source device (2) comprising a transmitter configured according to the method of one of claims 1 to 7.

10. Destination device (3) comprising a receiver (31) configured according to the method of one of claims 1 to 7 and means configured for: determining training data based on:

- receiving successive signals (y),
- determining a sequence of received messages ($\hat{s}$) corresponding to the received successive signals,
- mapping said sequence of received messages ($\hat{s}$) to a received codeword (RCW),
- determining destination data ($\hat{u}$) as a function of the received codeword (RCW), by decoding an error correction code, and
- determining a sequence of transmitted messages (s) as a function of the destination data ($\hat{u}$),

sending the training data to the configuration device.

11. Configuration device (5) for a data transmission system, wherein the data transmission system (1) comprises at least one transmitter (22), at least one receiver (31), and a communication channel (4) between the transmitter and the receiver, the configuration device (5) comprising means configured for:

- training (S1) a machine learning model (6) of the data transmission system (1), wherein the machine learning model (6) specifies a relationship between input data (s) of the transmitter (22) and output data ($\hat{s}$) of the receiver (31), wherein the machine learning model (6) specifies at least a transmitter model (7), a channel model (8), and a receiver model (9) including a receiver neural network (10, 11), wherein the machine learning model is trained as an autoencoder,
- configuring (S2) the transmitter and the receiver based on the trained machine learning model (6),

**characterized in that** said means are configured for, after configuring (S2) the transmitter and the receiver based on the trained machine learning model (6):

- obtaining (S3), from the receiver, training data specifying a set of messages sent by the transmitter and the corresponding signals received by the receiver, wherein said training data has been determined by the receiver by:

- receiving successive signals (y),
- determining a sequence of received messages ($\hat{s}$) corresponding to the received successive signals,
- mapping said sequence of received messages ($\hat{s}$) to a received codeword (RCW),
- determining destination data ($\hat{u}$) as a func-

tion of the received codeword (RCW), by decoding an error correction code, and
- determining a sequence of transmitted messages (s) as a function of the destination data (û),

- training (S4) the receiver model (9) based on the obtained training data, and
- configuring (S5) the receiver based on the trained receiver model (9).

12. Data transmission system (1), comprising at least one source device according to claim 9, at least one destination device according to claim 10 and a configuration device (5) according to claim 11.

**Patentansprüche**

1. Computerimplementiertes Verfahren zum Auslegen eines Datenübertragungssystems (1), wobei das Datenübertragungssystem (1) mindestens einen Sender (22), mindestens einen Empfänger (31) und einen Kommunikationskanal (4) zwischen dem Sender und dem Empfänger umfasst, wobei das Verfahren Folgendes umfasst:

   - Trainieren (S1) eines Maschinenlernmodells (6) des Datenübertragungssystems (1), wobei das Maschinenlernmodell (6) eine Beziehung zwischen Eingangsdaten (s) des Senders (22) und Ausgangsdaten (ŝ) des Empfängers (31) spezifiziert, wobei das Maschinenlernmodell (6) mindestens ein Sendermodell (7), ein Kanalmodell (8) und ein Empfängermodell (9), das ein neuronales Empfangsnetzwerk (10, 11) beinhaltet, spezifiziert, wobei das Maschinenlernmodell als Autocodierer trainiert wird,
   - Auslegen (S2) des Senders und des Empfängers auf Basis des trainierten Maschinenlernmodells (6),

   **dadurch gekennzeichnet, dass** es nach dem Auslegen (S2) des Senders und des Empfängers auf Basis des trainierten Maschinenlernmodells (6) Folgendes umfasst:

   - Erhalten (S3) von Trainingsdaten, die einen Satz von Nachrichten, die vom Sender gesendet werden, und die entsprechenden Signale, die vom Empfänger empfangen werden, spezifizieren, vom Empfänger (31), wobei die Trainingsdaten vom Empfänger durch Folgendes bestimmt wurden:
   - Empfangen von aufeinanderfolgenden Signalen (y),
   - Bestimmen einer Sequenz von empfangenen Nachrichten (ŝ), die den empfangenen aufein-

anderfolgenden Signalen entsprechen,
   - Zuordnen der Sequenz von empfangenen Nachrichten (ŝ) zu einem empfangenen Codewort (RCW),
   - Bestimmen von Zieldaten (û) als eine Funktion des empfangenen Codeworts (RCW) durch Decodieren eines Fehlerkorrekturcodes, und
   - Bestimmen einer Sequenz von übertragenen Nachrichten (s) als eine Funktion der Zieldaten (û),
   - Trainieren (S4) des Empfängermodells (9) auf Basis der erhaltenen Trainingsdaten, und
   - Auslegen (S5) des Empfängers auf Basis des trainierten Empfängermodells (9).

2. Verfahren nach Anspruch 1, wobei das Sendermodell ein neuronales Sendenetzwerk beinhaltet und das Verfahren das Auslegen des Senders auf Basis des trainierten Maschinenlernmodells umfasst.

3. Verfahren nach einem der Ansprüche 1 bis 2, das das Wiederholen des Erhaltens (S3) von Trainingsdaten, des Trainierens (S4) des Empfängermodells und des Auslegens (S5) des Empfängers umfasst.

4. Verfahren nach einem der Ansprüche 1 bis 3, das das Bestimmen gemäß einer zyklischen Redundanzprüfung, ob die Zieldaten (û) gültig sind, umfasst.

5. Verfahren nach einem der Ansprüche 1 bis 4, wobei das Trainieren des Maschinenlernmodells das Bestimmen von Gewichtungen des neuronalen Empfangsnetzwerks durch Anwenden eines stochastischen Gradientenabfallalgorithmus umfasst.

6. Verfahren nach einem der Ansprüche 1 bis 5, wobei das Sendermodell ein neuronales Sendenetzwerk beinhaltet, wobei das neuronale Sendenetzwerk mehrere dichte Schichten (12), gefolgt von einer Normalisierungsschicht (13), die zum Anwenden von einem von Folgendem ausgelegt ist: einer Normalisierung auf eine vorbestimmte Norm, Skalieren auf einen absoluten Einheitswert, Faltung mit einem Filter, beinhaltet.

7. Verfahren nach einem der Ansprüche 1 bis 6, wobei das Sendermodell ein neuronales Sendenetzwerk und mindestens ein weiteres Senderverarbeitungsmodul beinhaltet und/oder das Empfängermodell das neuronale Empfangsnetzwerk und mindestens ein weiteres Empfängerverarbeitungsmodul beinhaltet.

8. Computerprogramm (P), das Anweisungen umfasst, die, wenn das Programm von einem Computer ausgeführt wird, den Computer veranlassen, das Verfahren nach einem der Ansprüche 1 bis 7 umzusetzen.

9. Quellvorrichtung (2), die einen Sender umfasst, der gemäß dem Verfahren nach einem der Ansprüche 1 bis 7 ausgelegt ist.

10. Zielvorrichtung (3), die einen Empfänger (31), der gemäß dem Verfahren nach einem der Ansprüche 1 bis 7 ausgelegt ist, und Mittel, die zu Folgendem ausgelegt sind, umfasst:
Bestimmen von Trainingsdaten auf Basis von Folgendem:

- Empfangen von aufeinanderfolgenden Signalen (y),
- Bestimmen einer Sequenz von empfangenen Nachrichten ($\hat{s}$), die den empfangenen aufeinanderfolgenden Signalen entsprechen,
- Zuordnen der Sequenz von empfangenen Nachrichten ($\hat{s}$) zu einem empfangenen Codewort (RCW),
- Bestimmen von Zieldaten (û) als eine Funktion des empfangenen Codeworts (RCW) durch Decodieren eines Fehlerkorrekturcodes, und
- Bestimmen einer Sequenz von übertragenen Nachrichten (s) als eine Funktion der Zieldaten (û),

Senden der Trainingsdaten an die Auslegungsvorrichtung.

11. Auslegungsvorrichtung (5) für ein Datenübertragungssystem, wobei das Datenübertragungssystem (1) mindestens einen Sender (22), mindestens einen Empfänger (31) und einen Kommunikationskanal (4) zwischen dem Sender und dem Empfänger umfasst, wobei die Auslegungsvorrichtung (5) Mittel umfasst, die zu Folgendem ausgelegt sind:

- Trainieren (S1) eines Maschinenlernmodells (6) des Datenübertragungssystems (1), wobei das Maschinenlernmodell (6) eine Beziehung zwischen Eingangsdaten (s) des Senders (22) und Ausgangsdaten ($\hat{s}$) des Empfängers (31) spezifiziert, wobei das Maschinenlernmodell (6) mindestens ein Sendermodell (7), ein Kanalmodell (8) und ein Empfängermodell (9), das ein neuronales Empfangsnetzwerk (10, 11) beinhaltet, spezifiziert, wobei das Maschinenlernmodell als Autocodierer trainiert wird,
- Auslegen (S2) des Senders und des Empfängers auf Basis des trainierten Maschinenlernmodells (6),

**dadurch gekennzeichnet, dass** die Mittel nach dem Auslegen (S2) des Senders und des Empfängers auf Basis des trainierten Maschinenlernmodells (6) zu Folgendem ausgelegt sind:

- Erhalten (S3) von Trainingsdaten, die einen Satz von Nachrichten, die vom Sender gesendet werden, und die entsprechenden Signale, die vom Empfänger empfangen werden, spezifizieren, vom Empfänger, wobei die Trainingsdaten vom Empfänger durch Folgendes bestimmt worden:

- Empfangen von aufeinanderfolgenden Signalen (y),
- Bestimmen einer Sequenz von empfangenen Nachrichten ($\hat{s}$), die den empfangenen aufeinanderfolgenden Signalen entsprechen,
- Zuordnen der Sequenz von empfangenen Nachrichten ($\hat{s}$) zu einem empfangenen Codewort (RCW),
- Bestimmen von Zieldaten (û) als eine Funktion des empfangenen Codeworts (RCW) durch Decodieren eines Fehlerkorrekturcodes, und
- Bestimmen einer Sequenz von übertragenen Nachrichten (s) als eine Funktion der Zieldaten (û),
- Trainieren (S4) des Empfängermodells (9) auf Basis der erhaltenen Trainingsdaten, und
- Auslegen (S5) des Empfängers auf Basis des trainierten Empfängermodells (9).

12. Datenübertragungssystem (1), das mindestens eine Quellvorrichtung nach Anspruch 9, mindestens eine Zielvorrichtung nach Anspruch 10 und eine Auslegungsvorrichtung (5) nach Anspruch 11 umfasst.

**Revendications**

1. Procédé mis en œuvre par ordinateur pour configurer un système de transmission de données (1), dans lequel le système de transmission de données (1) comprend au moins un émetteur (22), au moins un récepteur (31), et un canal de communication (4) entre l'émetteur et le récepteur, le procédé comprenant :

- la formation (S1) d'un modèle d'apprentissage machine (6) du système de transmission de données (1), dans lequel le modèle d'apprentissage machine (6) spécifie une relation entre des données d'entrée (s) de l'émetteur (22) et des données de sortie ($\hat{s}$) du récepteur (31), dans lequel le modèle d'apprentissage machine (6) spécifie au moins un modèle d'émetteur (7), un modèle de canal (8), et un modèle de récepteur (9) comportant un réseau neuronal de récepteur (10, 11), dans lequel le modèle d'apprentissage machine est formé comme un codeur automatique,

- la configuration (S2) de l'émetteur et du récepteur sur la base du modèle d'apprentissage machine (6) formé,

**caractérisé en ce qu'**il comprend, après la configuration (S2) de l'émetteur et du récepteur sur la base du modèle d'apprentissage machine (6) formé :

- l'obtention (S3), à partir du récepteur (31), de données de formation spécifiant un ensemble de messages envoyés par l'émetteur et les signaux correspondants reçus par le récepteur, dans lequel lesdites données de formation ont été déterminées par le récepteur en :
- recevant des signaux successifs (y),
- déterminant une séquence de messages reçus ($\hat{s}$) correspondant aux signaux successifs reçus,
- mettant en correspondance ladite séquence de messages reçus ($\hat{s}$) avec un mot de code reçu (RCW),
- déterminant des données de destination (û) en fonction du mot de code reçu (RCW), en décodant un code de correction d'erreur, et
- déterminant une séquence de messages transmis (s) en fonction des données de destination (û),
- la formation (S4) du modèle de récepteur (9) sur la base des données de formation obtenues, et
- la configuration (S5) du récepteur sur la base du modèle de récepteur (9) formé.

2. Procédé selon la revendication 1, dans lequel ledit modèle d'émetteur comporte un réseau neuronal d'émetteur, et ledit procédé comprend la configuration dudit émetteur sur la base du modèle d'apprentissage machine formé.

3. Procédé selon l'une des revendications 1 à 2, comprenant la répétition de ladite obtention (S3) de données de formation, la formation (S4) du modèle de récepteur et la configuration (S5) du récepteur.

4. Procédé selon l'une des revendications 1 à 3, comprenant la détermination de la validité ou non desdites données de destination (û) selon un contrôle de redondance cyclique.

5. Procédé selon l'une des revendications 1 à 4, dans lequel la formation dudit modèle d'apprentissage machine comprend la détermination de poids du réseau neuronal de récepteur en appliquant un algorithme de descente de gradient stochastique.

6. Procédé selon l'une des revendications 1 à 5, dans lequel le modèle d'émetteur comporte un réseau neuronal d'émetteur, dans lequel le réseau neuronal d'émetteur comporte des couches denses multiples (12) suivies d'une couche de normalisation (13) configurée pour appliquer une parmi : une normalisation à une norme prédéterminée, une mise à l'échelle à une valeur absolue unitaire et une convolution avec un filtre.

7. Procédé selon l'une des revendications 1 à 6, dans lequel le modèle d'émetteur comporte un réseau neuronal d'émetteur et au moins un autre module de traitement d'émetteur, et/ou le modèle de récepteur comporte ledit réseau neuronal de récepteur et au moins un autre module de traitement de récepteur.

8. Programme informatique (P) comprenant des instructions qui, lorsque le programme est exécuté par un ordinateur, amènent l'ordinateur à effectuer le procédé de l'une des revendications 1 à 7.

9. Dispositif source (2) comprenant un émetteur configuré selon le procédé de l'une des revendications 1 à 7.

10. Dispositif destinataire (3) comprenant un récepteur (31) configuré selon le procédé de l'une des revendications 1 à 7 et des moyens configurés pour : déterminer des données de formation sur la base de :

   - la réception de signaux successifs (y),
   - la détermination d'une séquence de messages reçus ($\hat{s}$) correspondant aux signaux successifs reçus,
   - la mise en correspondance de ladite séquence de messages reçus ($\hat{s}$) avec un mot de code reçu (RCW),
   - la détermination de données de destination (û) en fonction du mot de code reçu (RCW), en décodant un code de correction d'erreur, et
   - la détermination d'une séquence de messages transmis (s) en fonction des données de destination (û),
   envoyer les données de formation au dispositif de configuration.

11. Dispositif de configuration (5) pour un système de transmission de données, dans lequel le système de transmission de données (1) comprend au moins un émetteur (22), au moins un récepteur (31), et un canal de communication (4) entre l'émetteur et le récepteur, le dispositif de configuration (5) comprenant des moyens configurés pour :

   - former (S1) un modèle d'apprentissage machine (6) du système de transmission de données (1), dans lequel le modèle d'apprentissage machine (6) spécifie une relation entre des données d'entrée (s) de l'émetteur (22) et des données de sortie ($\hat{s}$) du récepteur (31), dans lequel le modèle d'apprentissage machine (6) spécifie au moins un modèle d'émetteur (7), un modèle de canal (8), et un modèle de récepteur (9) comportant un réseau neuronal de récepteur (10, 11), dans lequel le modèle d'apprentissage machine est formé comme un codeur automatique,

- configurer (S2) l'émetteur et le récepteur sur la base du modèle d'apprentissage machine (6) formé,

**caractérisé en ce que** lesdits moyens sont configurés pour, après la configuration (S2) de l'émetteur et le récepteur sur la base du modèle d'apprentissage machine (6) formé :

- obtenir (S3), à partir du récepteur, des données de formation spécifiant un ensemble de messages envoyés par l'émetteur et les signaux correspondants reçus par le récepteur, dans lequel lesdites données de formation ont été déterminées par le récepteur en :

    - recevant des signaux successifs (y),
    - déterminant une séquence de messages reçus ($\hat{s}$) correspondant aux signaux successifs reçus,
    - mettant en correspondance ladite séquence de messages reçus ($\hat{s}$) avec un mot de code reçu (RCW),
    - déterminant des données de destination (û) en fonction du mot de code reçu (RCW), en décodant un code de correction d'erreur, et
    - déterminant une séquence de messages transmis (s) en fonction des données de destination (û),
    - former (S4) le modèle de récepteur (9) sur la base des données de formation obtenues, et
    - configurer (S5) le récepteur sur la base du modèle de récepteur (9) formé.

12. Système de transmission de données (1), comprenant au moins un dispositif source selon la revendication 9, au moins un dispositif destinataire selon la revendication 10 et un dispositif de configuration (5) selon la revendication 11.

FIG. 1

FIG. 2

FIG. 5

FIG. 3

FIG. 4

**EP 3 418 821 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9681332 B

**Non-patent literature cited in the description**

- **TIMOTHY J O'SHEA et al.** An Introduction to Machine Learning Communications Systems. COR-NELL UNIVERSITY LIBRARY, 201 OLIN LIBRARY CORNELL UNIVERSITY ITHACA, 02 February 2017